# EUROPEAN PATENT SPECIFICATION

(11) **EP 1 742 526 B1**
(45) Date of publication and mention of the grant of the patent: **08.07.2015**
(21) Application number: 05735610.7
(22) Date of filing: 19.04.2005
(51) Int. Cl.: A01F 12/40, A01F 7/02, A01F 12/34, A01D 41/00, A01D 41/12

(54) **COMBINE HARVESTER WITH A SPREADER HAVING INDEPENDENT SPREAD WIDTH CONTROL**
MÄHDRESCHER MIT EINEM STREUER MIT UNABHÄNGIGER STREUBREITENSTEUERUNG
MOISSONNEUSE-BATTEUSE COMPRENANT UN PULVÉRISATEUR PRÉSENTANT UNE RÉGULATION DE LA LARGEUR DE PULVÉRISATION INDÉPENDANTE

(30) Priority: 23.04.2004 CA 2465142
(43) Date of publication of application: 17.01.2007
(73) Proprietor: Redekop Enterprises Inc., Saskatoon, SK S7K 3J7 (CA)
(72) Inventor: REDEKOP, Leo, Saskatoon, Saskatchewan S7K 3J7 (CA); REDEKOP, Kevin, Saskatoon, Saskatchewan S7K 3J7 (CA); MAYERLE, Dean, Saskatoon, Saskatchewan S7K 3J7 (CA)
(74) Representative: Jostarndt, Hans-Dieter
(86) International application number: PCT/CA2005/000597
(87) International publication number: WO 2005/102027

(56) References cited:
- EP-A1- 0 993 764
- EP-A1- 1 163 834
- EP-A1- 1 269 822
- EP-A1- 1 342 402
- DE-U1- 20 019 686
- US-A- 4 921 469
- US-A- 5 232 405
- US-A- 6 082 647
- US-A1- 2002 142 814
- US-B1- 6 331 142
- PATENT ABSTRACTS OF JAPAN vol. 1997, no. 01 31 January 1997 & JP 08 228 589 A (TOKIHIRO N. ET AL) 10 September 1996

## Description

This invention relates to a combine harvester or to a chopper and spreader for use with a combine harvester where there is provided independent spread width control for each side.

### BACKGROUND OF THE INVENTION

One of the primary requirements of today's farmers on straw and chaff spreading systems are that they evenly distribute residue over a combine's entire cutting width. Often a straw chopper or spreading mechanism will be able to cover the cutting width of the combine, however equally important is the consistency of the spread.

Variables such as a field's terrain, cutting height and wind direction alter the final placement of the residue. The cutting width of the machine may change regularly due to different headers that are quickly attached to the combine for different crops or conditions. The combine's headers can vary from a pick-up header, gathering in a swath that is cut from a pass as wide as 60 feet or as narrow as 18 feet, to an offset mounted 36 foot wide straight cut header. Many farmers want the spread width to be quickly and independently adjustable left to right while maintaining and even distribution of straw across the field. Many farmers would like to do this on the go from the seat of their cab.

Current methods to adjust the spread width involve adjustment of individual fins and/or changing the angle of the tailboard. The tailboard is easily adjusted on most systems however often the fins also need to be adjusted to eliminate the concentration of residue (rowing) in the field. Fin adjustment is very time consuming and is often not well understood by the operator. Typically an operator will adjust the fins once, most times guessing at a position and then living with the results.

Other systems allow similar adjustment of the tailboard and a single adjustment of all fins with a central lever or an electric actuator. These systems are quick and get the operator relatively close however often fine-tuning is never completed because of the complexity of the system and difficult methods to accommodate left to right differentiation.

Problems exist with existing technology. Current methods to manually change the spread width are time consuming and not well understood by the operator. High level of complexity to change spread distribution are problematic including linkages moving fins with individual adjustment.

US 2,708,582- Adams - 1955 - Details an angular adjustable tailboard with adjustable fins mounted to the tailboard to vary spread width.

US 4,921,469- Scharf - 1990 - Details a tailboard with a motorized fin control system. The system is designed with a single electric actuator and a linkage to vary the fin position. The linkage is designed to allow one side of the tailboard to position the fins generally straight while the other side is positioned outwards. The mechanism rotates the outer fins more than the inner to provide an even distribution as the spread width changes. An alternate embodiment details each fin set with a separate fully independent control. This is much more complex than the arrangement disclosed herein.

US 5,569,081- Baumgarten - 1996 - A tailboard with motorized fin controls includes a wind sensor for detecting the speed and direction. In order to compensate for the wind the fins are automatically adjusted for optimum spread. The left and right fin sets are independently controlled.

US 6,082,647 - Claes - 2000 - A split chopper is disclosed with two complete choppers mounted at obtuse angles to each other.

US 6,602,131- Wolters - 2003 - A flow guide with a horizontal axis is adjustable to vary the spread width

US Application 2002/0072400- Foth - 2002 - A tailboard with a motorized fin control where the fins continually move back and forth to eliminate rowing or more evenly distribute the residue.

US Application 2003/0162576- Buermann - 2003 - Fin Control Box/ Monitor that is mounted in the cab to control the fin positions - the buttons on the monitor have a first control and a second selective operation.

German utility model DE-U-20019686 depicts a two part tailboard that operates with a vertical pivot, that is the tailboards rotate away from each other to change the direction of the straw being discharged from the chopper housing. This arrangement is an improvement to the well-known arrangement for the individual adjustment of the fins where it is well known that a front bolt (vertical pivot) provides a left and right movement of the back end of the fin when the rear bolt is loosened. This citation therefore provides in effect an improved way to rotate the fins outward.

US 6,331,142 shows a spreader which is formed in two parts rigidly connected together and cannot move independently.

### SUMMARY OF THE INVENTION

It is one object of the invention to provide an improved combine harvester and/or a chopper therefor which provides an improved spread control.

According to the invention there is provided a chopper and discharge apparatus (15) arranged to be mounted at the hood of a combine harvester (10) for receiving the straw and/or chaff from the combine harvester and for discharging the materials from the combine harvester, the apparatus comprising:
a housing having a feed opening into which straw and/or chaff can be fed from the combine harvester;
a chopping assembly mounted in the housing and comprising a hub member mounted for rotation about a longitudinal axis of the hub member (28) and a plurality of blade members (30) mounted on the hub member for rotation therewith about said axis for chopping the fed materials and accelerating the chopped materials for discharge;
the housing having a discharge opening (40) through which the chopped materials are discharged;
a tailboard construction (41) arranged relative to the housing so as to receive the stream of chopped materials from the discharge opening to engage onto a guide surface of the tailboard construction for spreading of the chopped materials;
the tailboard construction extending from the housing and being adjustable by pivotal movement about a horizontal axis (41A) so as to raise and lower the tailboard construction;
wherein the tailboard construction is divided into separate tailboard portions (112, 113) arranged side by side across the stream of chopped materials, each arranged to receive a portion of the stream of chopped materials;
characterized in that each of the separate tailboard portions is adjustable by pivotal movement about said horizontal axis (41 A) to raise and lower the respective tailboard portion (112, 113) independently of the other or others so as to vary the spreading effect on the portion of the stream of chopped materials engaging the tailboard portion and to provide a different spreading effect on the portion of the stream received thereon relative to the portions of the stream received on the other tailboard portions.

Preferably the tailboard construction is divided into two pieces only which are split is 50/50. However more than two pieces may be used in some circumstances, for example a center sections and two independently adjustable side sections.

Preferably there is at least one fin on each tailboard portion

Preferably the fins are adjustable in angle side to side relative to the tailboard portions.

Preferably there is provided an arrangement to prevent chopped materials entering a gap between the tailboard portions. This is preferably effected by each of the tailboard portions at the gap therebetween carrying a fin which extends at least in part along the edge at the gap.

Preferably each tailboard portion has more than one mounting for each fin such that the fins on each portion can be mounted thereon in more than one fin pattern.

Preferably each tailboard portion is adjustable between a number of predetermined discrete positions.

Alternatively each tailboard portion is infinitely adjustable between end positions.

Preferably each tailboard portion is adjusted in angle by a motor operable remotely from the cab/operator's seat.

Preferably each tailboard portion is adjusted in angle by a motor operable while the combine to which the apparatus is mounted is harvesting.

Certain objectives of the Invention which may be provided by the arrangements described in detail hereinafter are as follows:
Simplified and cost reduced method to quickly change spread width;
Simplified and cost reduced method of adjusting spread distribution;
Enhanced method to control the change - from the cab;
Increase in reliability / reduction of parts;
Allows a higher level of manufacturing assembly two components that are easier to move / handle.

### BRIEF DESCRIPTION OF THE DRAWINGS

One embodiment of the invention will now be described in conjunction with the accompanying drawings in which:
Figure 1 is an isometric view of a rear section of a combine harvester showing many components schematically and including a spreading arrangement in accordance with the present invention.

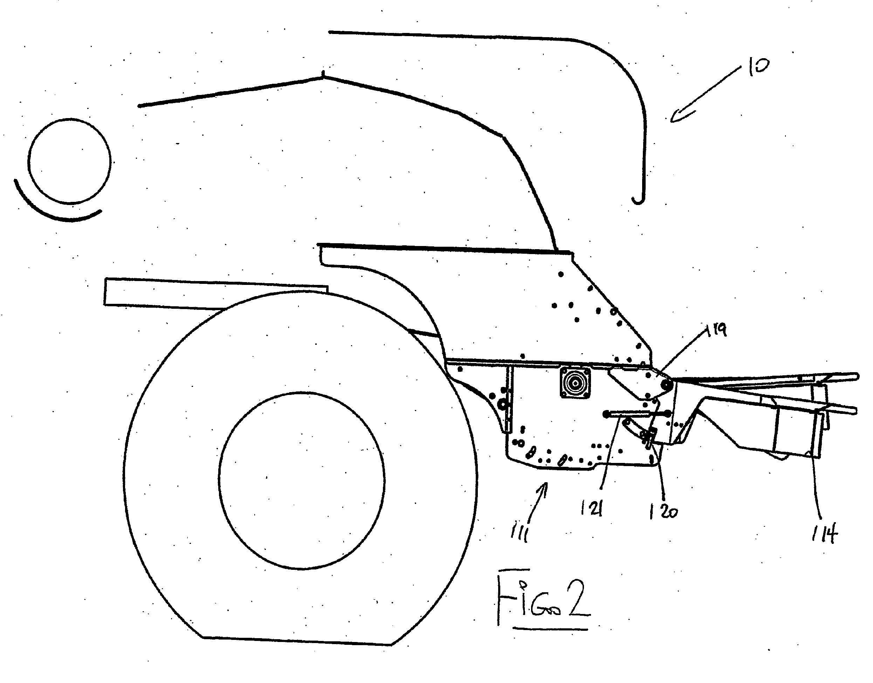

Figure 2 is a side elevational view of the components of Figure 1.
Figure 3 is a side elevational view of the components of Figure 1 showing internal components in phantom.
Figure 4 is an isometric view of the chopper and spreading system only of Figure 1 from the top and one side.

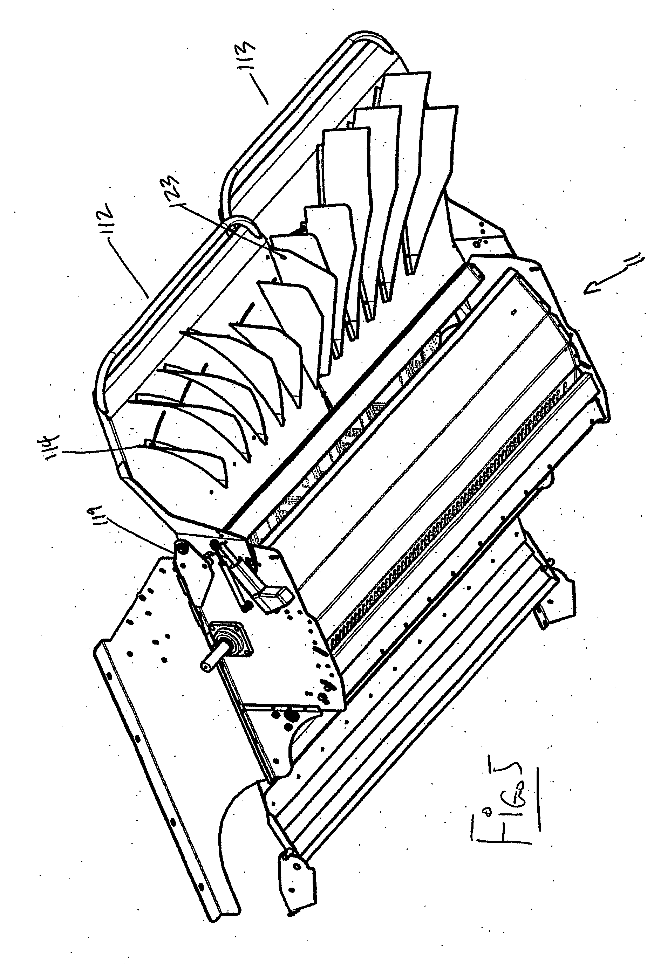

Figure 5 is an isometric view of the chopper and spreading system only of Figure 1 from the bottom and the one side.

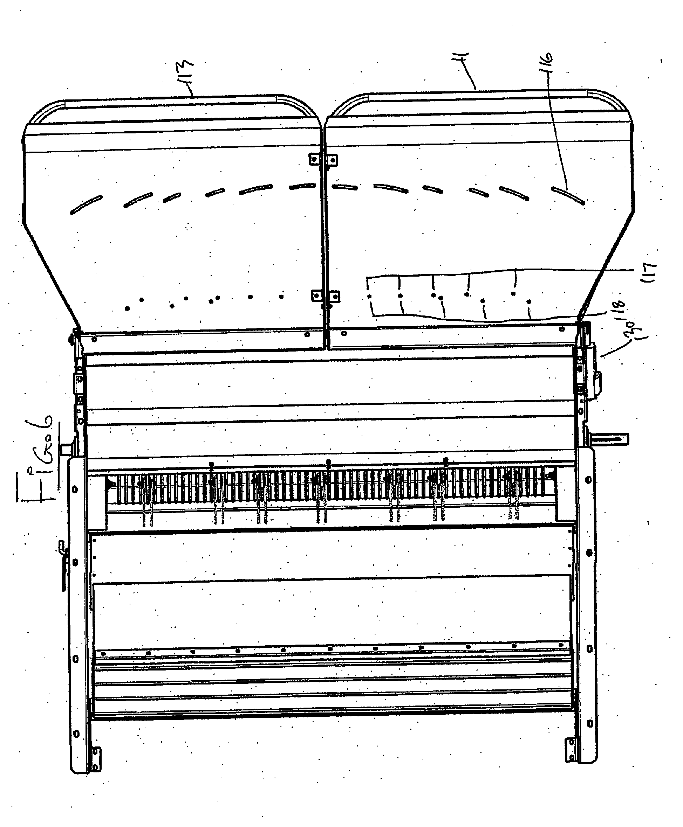

Figure 6 is a top plan view of the chopper and spreading system only of Figure 1.

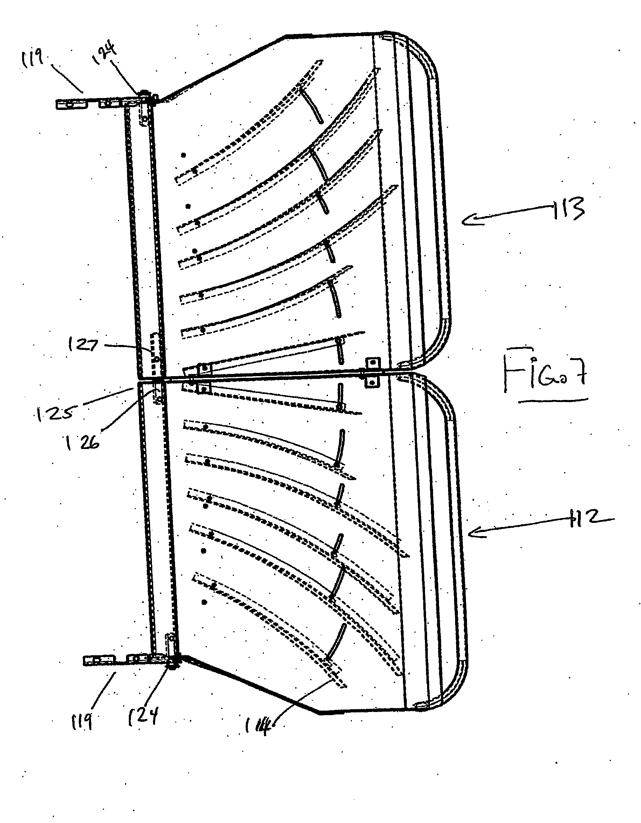

Figure 7 is a top plan view of the tailboard only of Figure 1 showing components in phantom.

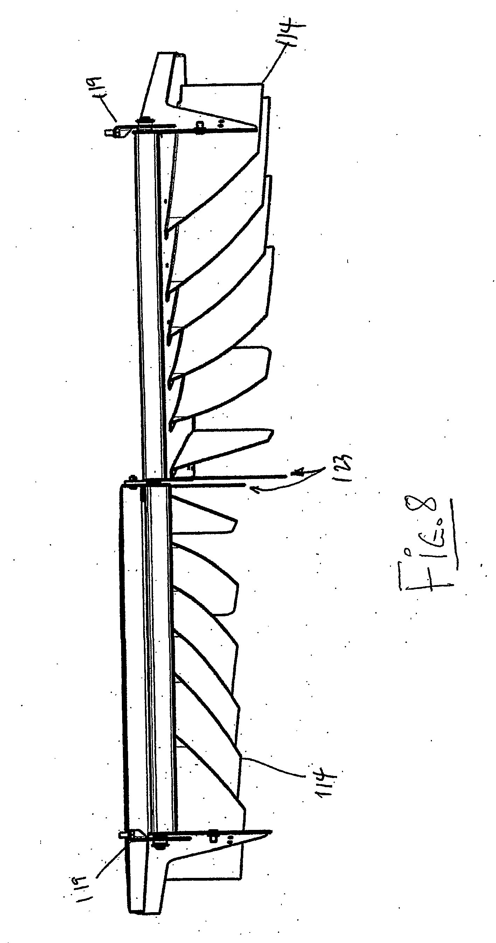

Figure 8 is a front elevational view of the tailboard only of Figure 1.

In the drawings like characters of reference indicate corresponding parts in the different figures.

### DETAILED DESCRIPTION

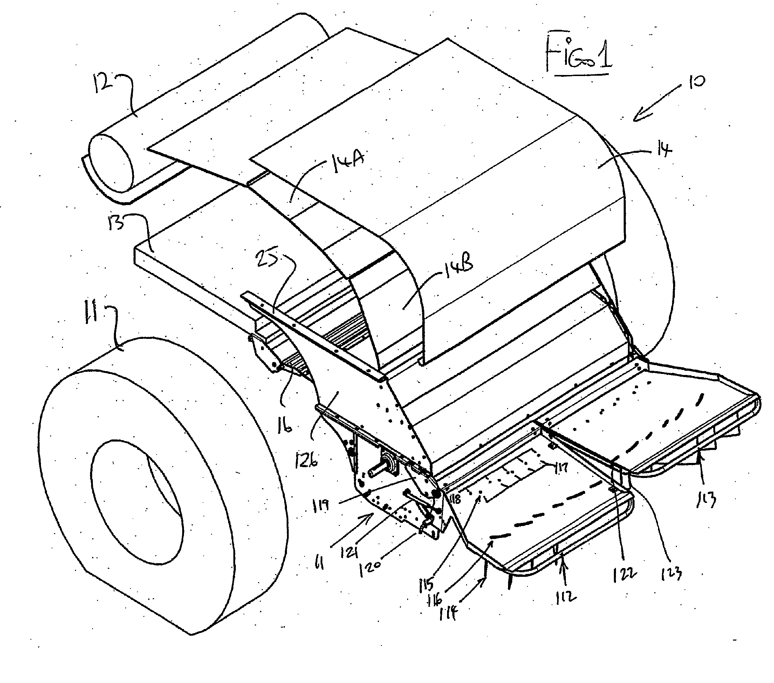

A combine harvester shown in Figure 1 comprises a combine harvester housing 10 mounted on ground wheels 11 for transport over a ground in conventional manner. The combine harvester is shown only schematically since many different designs are available and well known to one skilled in the art. The combine harvester includes a straw separation section generally indicated at 12 and a sieve section generally indicated at 13. Again these elements are conventional and provide arrangements for separation of the straw from the crop material allowing the seed material to fall through to the sieve at which seeds are separated from the seed material leaving the chaff or other lighter materials on top of the sieve to be carried away from the sieve by an air flow through the sieve as is well known.

The rear of the combine is provided is a rear hood 14 into which air from the straw separation system and the sieves enters and into which straw is discharged rearwardly for and is guided by guide wall 14A and by operable guide panel 14B in the hood section 14 into a chopper and spreader generally indicated at 15.

This arrangement is well known and commercial products are readily available from Redekop Manufacturing and other manufacturers of straw choppers of this type.

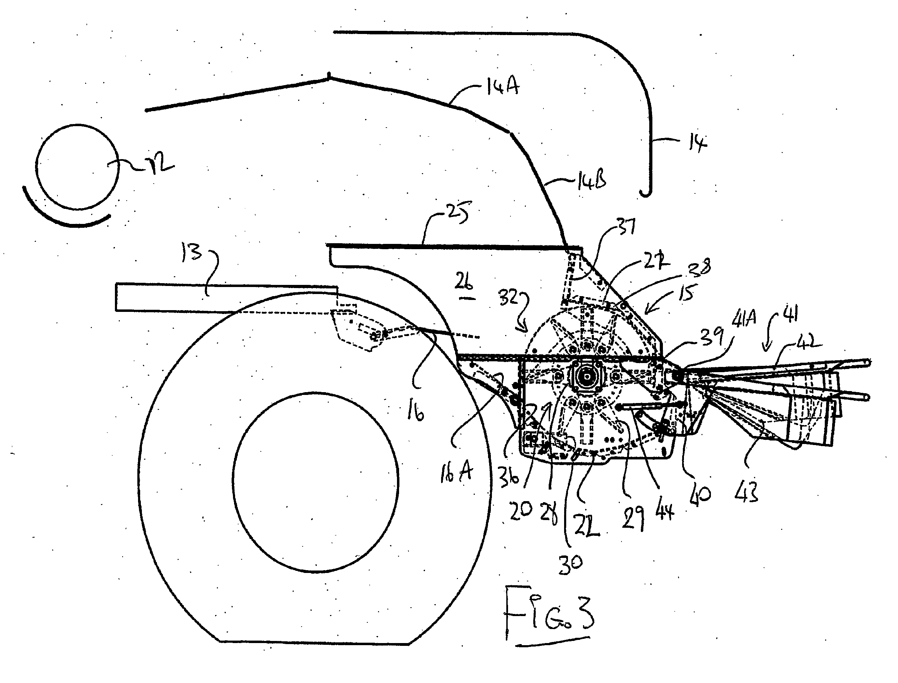

The chaff from the rear end of the sieve as best shown in Figure 3 at 13 is carried by a movable pan 16 and a chaff control door 16A into the inlet 32 of the chopper 15.

An example of a chopper of this type is disclosed in US Patents 6,478,674 issued Nov 12th 2002, 5,482,508 issued Jan 9th 1996 and 5,232,405 issued August 3rd 1993 all of Leo Redekop, and US application 2002/0004417 published Jan 10th 2002 the disclosures of which are incorporated herein by reference.

The chopper has a horizontal upper mounting flange 25 which attaches to a corresponding bottom flange of the hood of the combine. This forms a rectangular open mouth at the top of the chopper which corresponds in shape to the rectangular lower opening of the hood so that all material discharging from the guide walls 14A and 14B falls into the upper part of the housing and enters the inlet 32 of the chopper.

The chopper comprises a housing attached to the top mounting flange and depending therefrom and defined by side walls 26 at opposite sides of the hood and generally co-planar therewith. Bridging the side walls 26 is provided a bottom wall 22 and a top wall 21 which extend across the width of the chopper and form a generally cylindrical containing surface for receiving the chopper rotor 20. The rotor 20 includes a hub 28 with a plurality of radially extending flails or blades 29 carried on the rotor for rotation therewith around the axis of the rotor which is arranged across the width of the chopper.

Many different arrangements and construction of blade can be used as are well known to one skilled in the art and described in the above patents of Redekop. In most cases the chopper includes stationary blades 30 mounted on the bottom wall 22 at a position partway around the bottom wall. The stationary blades are arranged in a row at spaced positions across the width of the chopper so as to co-operate with the rotating blades of the hub in a chopping action. The spacing between the blades can be selected in accordance with the type of rotating blades as is well known to one skilled in the art.

The top wall 21 and the bottom wall 22 define at the upper part of the housing the inlet 32 into which the straw can be guided from the hood and from the sieve 13. The chaff guide plate 16 and control door 16A carry the chaff from the end of the sieve over the space between the end of the sieve and the front edge 36 of the bottom wall 22 so as to carry the chaff in the air stream from the sieve over the plate and into the opening 32.

The top wall 21 includes a generally vertical portion 37 which extends downwardly from the top flange 25 to the top of the rotor. The top wall 21 further includes a curved section 38 which extends around the top of the rotor to a rear edge 39 which defines the top edge of the rear discharge opening 40 through which the material exits in the stream of air and chopped materials generated by the rotation of the rotor within the housing.

A tailboard 41 is pivotally mounted on the rear part of the housing at a pivot mount 41A. The tailboard comprises a base plate 42 with a series of fins 43 on the underside shaped and arranged so that material exiting from the discharge opening 40 is thrown up against the underside of the tailboard and impacts the fins causing a change in direction of the material on the tailboard so as to spread the material using the momentum generated in the stream from the rotor. The angle of the tailboard can be adjusted around the pivot 41A by positioning a spring loaded pin. The load of the tailboard is counteracted with a gas cylinder 44.

In the arrangement particularly described herein, the chopper 15 has been configured with a left and a right tailboard portions 112 and 113. Each tailboard portion incorporates six fins 114 that pivot about front holes 115 and are fixed along a back slot 116. This tailboard incorporates a first leading edge fin placement 117 and a second placement 118 with a common corresponding rear slot 116. The fins in all drawings are shown in the first pattern. The first fin placement 117 is used for a high air velocity rotor (fan end rotor) and optimizes the product spread on a wide spread pattern. The second placement pattern 118 is utilized with a traditional rotor most often used with narrow spread aggressive cutting chopper - low air velocities.

The left and right tailboards are mounted to the straw chopper 111 with side plates 119. Side plates 119 are mounted to the chopper flange in such a way that the tailboard assembly can be removed from the chopper without dismantling the rest of the chopper. The tailboard's angular position is fixed with a spring-loaded pin 120 in a slot on each side of the straw chopper. A gas spring 121 on each side of the housing counter balances the weight of the tailboard allowing the operator to easily adjust each of the tailboards positions. The tailboards can be bolted together for initial installation with bolts through holes 122 however once the assembly is attached to the chopper each tailboard is fully adjustable independent of each other.

Inner fin 123 on each tailboard is designed to keep straw from plugging in the gap between the two tailboards. The shape of the fin matches the side profile of the gap between the two tailboards when they are adjusted to their extremities. This minimizes the straw build-up on the top of the tailboards and stops a blunt scissor effect and associated torque increase to change angular positions if straw was draped through the space between the tailboards.

The tailboards pivot on a common axis. The axis is defined by the pivot 124 in each side plate 119 and the center pivot 125. The left tailboard 112 incorporates a long center pin 126), which matched a receiver 127 with bushings on the right tailboard 113. This eliminates the alignment requirement for a long pin through both-tailboards.

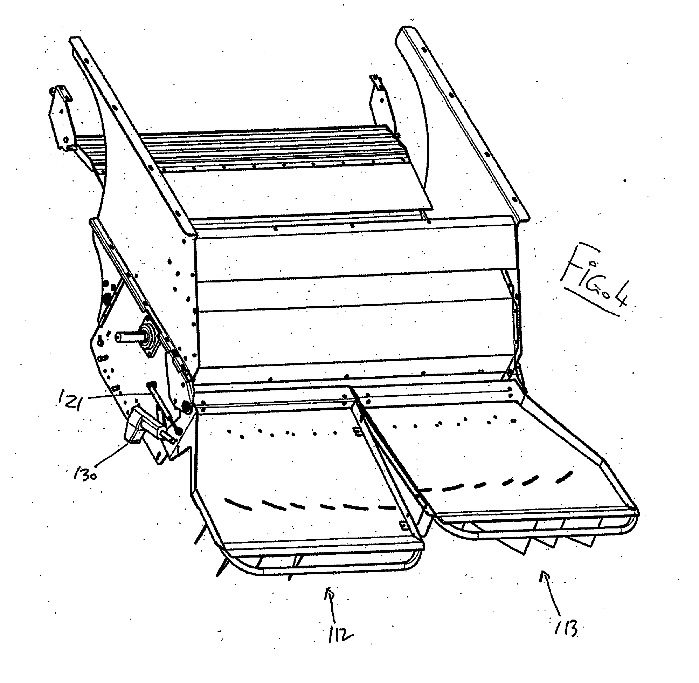

Figure 4 shows the invention with an electric actuator 130 operable by a remote control from the cab mounted to each side of each tailboard. In this case the spring loaded pin assembly 120 is removed from each tailboard and actuator mounted. The gas spring 121 remains mounted to the tailboard to reduce the shock load and rotational loads encountered by the actuator 130. The left actuator is able to rotate the left tailboard and while the right actuator independently controls the position of the right tailboard 113 thereby altering the left and right spread width from the cab with a controller and monitor.

The monitor/ controller in the cab includes 3 buttons that position the tailboards in memorized positions, along with the means to adjust and save the memorized positions. This allows the operator to set both the left and right tailboard while operating in one position, then when coming back in the opposite direction have a second memorized position for both tailboards, then have a third position if he were to travel in a direction other than the 2 previous. This takes care of typical harvesting patterns: 1- back and forth, 2 - traveling around a square field, but of course there could be as many memorized positions as feasible.

Adjusting both tailboards down 5 degrees will reduce the total spread width by 5 ft; therefore if one tailboard is adjusted down 5 degrees the spread to that side from the centerline will be reduced by 2.5 ft. The tailboard when adjusted with the spring-loaded pin has positions set 5 degrees apart from 5 degrees above horizontal to 20 degrees below. This means that it can be adjusted so that one side of the chopper is arranged to spread only 7.5 ft from the center while the other side spreads 20 ft. This is enough range for compensating for wind on even an offset header.

In an alternate embodiment (not shown) a chaff spreader with split adjustment can be provided. In particular, AGCO provides an arrangement which mounts the same (small) tailboard behind both their sieves and the chopper. The tailboard behind the sieves acts as a simple chaff spreader and the split tailboard described herein can be mounted behind their sieves with the advantages mentioned above.

In a further alternative arrangement (not shown) the split tailboard is not attached to a chopper housing but instead it is attached to the rear hood of a combine with an internal chopper

Since various modifications can be made in my invention as herein above described, and many apparently widely different embodiments of same made within the spirit and scope of the Claims without department from such spirit and scope, it is intended that all matter contained in the accompanying specification shall be interpreted as illustrative only and not in a limiting sense.

## Claims

1. A chopper and discharge apparatus (15) arranged to be mounted at the hood of a combine harvester (10) for receiving the straw and/or chaff from the combine harvester and for discharging the materials from the combine harvester, the apparatus comprising:
a housing having a feed opening into which straw and/or chaff can be fed from the combine harvester;
a chopping assembly mounted in the housing and comprising a hub member mounted for rotation about a longitudinal axis of the hub member (28) and a plurality of blade members (30) mounted on the hub member for rotation therewith about said axis for chopping the fed materials and accelerating the chopped materials for discharge;
the housing having a discharge opening (40) through which the chopped materials are discharged;-
a tailboard construction (41) arranged relative to the housing so as to receive the stream of chopped materials from the discharge opening to engage onto a guide surface of the tailboard construction for spreading of the chopped materials;
the tailboard construction extending from the housing and being adjustable by pivotal movement about a horizontal axis (41A) so as to raise and lower the tailboard construction;
wherein the tailboard construction is divided into separate tailboard portions (112, 113) arranged side by side across the stream of chopped materials, each arranged to receive a portion of the stream of chopped materials;
**characterized in that** each of the separate tailboard portions is adjustable by pivotal movement about said horizontal axis (41A) to raise and lower the respective tailboard portion (112, 113) independently of the other or others so as to vary the spreading effect on the portion of the stream of chopped materials engaging the tailboard portion and to provide a different spreading effect on the portion of the stream received thereon relative to the portions of the stream received on the other tailboard portions.

2. The straw chopper according to Claim 1 wherein the tailboard construction is divided into two side by side portions (112, 113) only which are split 50/50.

3. The straw chopper according to claim 1 or 2 wherein there is provided an arrangement (123) to prevent chopped materials entering a gap between adjacent side edges of the side by side tailboard portions (112, 113).

4. The straw chopper according to Claim 3 wherein the arrangement to prevent chopped materials entering the gap comprises, on each of the tailboard portions, a guide fin (123) which extends at least in part along a respective one of the side edges at the gap.

5. The straw chopper according to any one of Claims 1 to 4 wherein there is at least one guide fin on each tailboard portion

6. The straw chopper according to any one of Claims 1 to 5 wherein the tailboard portions each include a plurality of guide fins (114) which are adjustable in angle side to side relative to the tailboard portions.

7. The straw chopper according to Claim 6 wherein each tailboard portion (112, 113) has more than one mounting for each fin (114) such that the fins on each portion can be mounted thereon in more than one fin pattern.

8. The straw chopper according to any one of Claims 1 to 7 wherein each tailboard portion (112, 113) is adjustable between a number of predetermined discrete positions.

9. The straw chopper according to any one of Claims 1 to 7 wherein each tailboard portion (112, 113) is infinitely adjustable between end positions.

10. The straw chopper according to Claim 8 or 9 wherein each tailboard portion (112, 113) is adjustable by a motor (130) operable from a cab/operator's seat of the combine harvester (10).

11. The straw chopper according to Claim 8 or 9 wherein each tailboard portion (112, 113) is adjustable by a motor (130) operable while the combine harvester (10) to which the apparatus is mounted is harvesting.

## Patentansprüche

1. Häcksler- und Abgabevorrichtung (15), die dafür ausgelegt ist, an der Haube eines Mähdreschers (10) montiert zu werden, um das Stroh und/oder die Spreu von dem Mähdrescher zu empfangen und um das Gut von dem Mähdrescher abzugeben, wobei die Vorrichtung umfasst:
ein Gehäuse, das eine Zufuhröffnung aufweist, in die Stroh und/oder Spreu von dem Mähdrescher zugeführt werden können;
eine Häckselanordnung, die in dem Gehäuse montiert ist und ein Nabenelement, das zur Drehung um eine Längsachse des Nabenelements (28) montiert ist, und mehrere Messerelemente (30), die an dem Nabenelement zur Drehung damit um die Achse montiert sind, umfasst, um das zugeführte Gut zu häckseln und um das Häckselgut zur Abgabe zu beschleunigen;
wobei das Gehäuse eine Abgabeöffnung (40) aufweist, durch die das Häckselgut abgegeben wird;
eine Heckklappenkonstruktion (41), die in Bezug auf das Gehäuse so angeordnet ist, dass sie den Häckselgutstrom von der Abgabeöffnung empfängt und das Häckselgut auf einer Führungsfläche der Heckklappenkonstruktion das Häckselgut auszubreitet,
wobei die Heckklappenkonstruktion von dem Gehäuse ausgeht und durch Schwenkbewegung um eine horizontale Achse (41A) einstellbar ist, um die Heckklappenkonstruktion anzuheben und zu senken;
wobei die Heckklappenkonstruktion in getrennte Heckklappenteile (112, 113) geteilt ist, die über den Häckselgutstrom nebeneinander angeordnet sind, wobei jedes zum Empfangen eines Teils des Häckselgutstroms angeordnet ist;
**dadurch gekennzeichnet, dass** jedes der getrennten Heckklappenteile durch Schwenkbewegung um die horizontale Achse (41A) einstellbar ist,
um das jeweilige Heckklappenteil (112, 113) unabhängig von dem oder den anderen anzuheben und abzusenken, um die Ausbreitungswirkung an dem Teil des Häckselgutstroms, der mit dem Heckklappenteil in Eingriff ist, zu variieren und an dem Teil des Stroms, der darauf empfangen wird, in Bezug auf die Teile des Stroms, die auf den anderen Heckklappenteilen empfangen werden, eine andere Ausbreitungswirkung bereitzustellen.

2. Strohhäcksler nach Anspruch 1, wobei die Heckklappenkonstruktion in zwei nebeneinanderliegende Teile (112, 113) geteilt ist, wobei nur diese 50 : 50 geteilt sind.

3. Strohhäcksler nach Anspruch 1 oder 2, wobei eine Anordnung (123) vorgesehen ist, um zu verhindern, dass Häckselgut in einen Spalt zwischen angrenzenden Seitenrändern der nebeneinanderliegenden Heckklappenteile (112, 113) eintritt.

4. Strohhäcksler nach Anspruch 3, wobei die Anordnung an jedem der Heckklappenteile eine Führungsrippe (123) umfasst, die wenigstens teilweise entlang eines jeweiligen der Seitenränder des Spalts verläuft, um zu verhindern, dass Häckselgut in den Spalt eintritt.

5. Strohhäcksler nach einem der Ansprüche 1 bis 4, wobei es an jedem Heckklappenteil wenigstens eine Führungsrippe gibt.

6. Strohhäcksler nach einem der Ansprüche 1 bis 5, wobei die Heckklappenteile jeweils mehrere Führungsrippen (114) enthalten, deren Winkel von einer Seite zur anderen in Bezug auf die Heckklappenteile einstellbar sind.

7. Strohhäcksler nach Anspruch 6, wobei jedes Heckklappenteil (112, 113) für jede Rippe (114) mehr als eine Halterung aufweist, sodass die Rippen an jedem Teil in mehr als einem Rippenmuster daran montiert werden können.

8. Strohhäcksler nach einem der Ansprüche 1 bis 7, wobei jedes Heckklappenteil (112, 113) zwischen einer Anzahl vorgegebener diskreter Positionen einstellbar ist.

9. Strohhäcksler nach einem der Ansprüche 1 bis 7, wobei jedes Heckklappenteil (112, 113) zwischen Endpositionen stufenlos einstellbar ist.

10. Strohhäcksler nach Anspruch 8 oder 9, wobei jedes Heckklappenteil (112, 113) durch einen Motor (130), der von einem Führerhaus/Betreibersitz des Mähdreschers (10) aus betreibbar ist, einstellbar ist.

11. Strohhäcksler nach Anspruch 8 oder 9, wobei jedes Heckklappenteil (112, 113) durch einen Motor (130) einstellbar ist, der betreibbar ist, während der Mähdrescher (10), an dem die Vorrichtung montiert ist, erntet.

## Revendications

1. Appareil à hacher et à décharger (15) agencé pour être monté sur le capot d'une moissonneuse combinée (10) pour recevoir la paille et/ou les paillettes de la moissonneuse combinée et pour décharger les matières de la moissonneuse combinée, l'appareil comprenant:
un logement présentant une ouverture d'alimentation dans laquelle de la paille et/ou des paillettes peuvent être alimentées de la moissonneuse combinée;
un ensemble de hachage monté dans le logement et comprenant un élément de moyeu monté pour tourner sur un axe longitudinal de l'élément de moyeu (28) et une pluralité d'éléments de lame (30) montés sur l'élément de moyeu pour tourner avec celui-ci sur l'axe pour hacher les matières alimentées et accélérer les matières hachées pour les décharger ;
le logement présentant une ouverture de décharge (40) à travers laquelle les matières hachées sont déchargées;
- une construction de plan incliné (41) agencée par rapport au logement de façon à recevoir le flux de matières hachées de l'ouverture de décharge pour se mettre en prise sur une surface de guidage de la construction de plan incliné pour répartir les matières hachées;
la construction de plan incliné s'étendant depuis le logement et étant réglable par pivotement sur un axe horizontal (41A) de façon à élever et
abaisser la construction de plan incliné;
dans lequel la construction de plan incliné est divisée en parties de plan incliné séparées (112, 113) agencées côte à côte à travers le flux de matières hachées, chacune étant agencée pour recevoir une partie du flux de matières hachées;
**caractérisé en ce que** chacune des parties de plan incliné séparée est réglable par pivotement sur l'axe horizontal (41 A) pour élever et abaisser la partie de plan incliné (112, 113) respective indépendamment de l'autre ou
des autres de façon à varier l'effet de répartition sur la partie du flux de matière hachée se mettant en prise avec la partie de plan incliné et pour fournir un effet de répartition différent sur la partie du flux reçue dessus par rapport aux parties de flux reçues sur les autres parties de plan incliné.

2. Machine à hacher la paille selon la revendication 1, dans laquelle la construction de plan incliné est divisée en deux parties côte à côte (112, 113) uniquement qui sont séparées à 50/50.

3. Machine à hacher la paille selon la revendication 1 ou 2, dans laquelle un agencement (123) est prévu pour éviter que les matières hachées ne pénètrent dans un espace entre des bords latéraux adjacents des parties de plan incliné côte à côte (112, 113).

4. Machine à hacher la paille selon la revendication 3, dans laquelle l'agencement pour éviter que les matières hachées ne pénètrent dans l'espace comprend, sur chacune des parties de plan incliné, une ailette de guidage (123) qui s'étend au moins en partie le long de l'un respectif des bords latéraux sur l'espace.

5. Machine à hacher la paille selon l'une quelconque des revendications 1 à 4, dans laquelle il y a au moins une ailette de guidage sur chaque partie de plan incliné.

6. Machine à hacher la paille selon l'une quelconque des revendications 1 à 5, dans laquelle les parties de construction inclinée comprennent chacune une pluralité d'ailettes de guidage (114) qui sont réglables en angle côte à côte par rapport aux parties de plan incliné.

7. Machine à hacher la paille selon la revendication 6, dans laquelle chaque partie de plan incliné (112, 113) présente plus d'un seul montage pour chaque ailette (114) de telle sorte que les ailettes sur chaque partie peuvent être montées dessus dans plus d'un modèle d'ailettes.

8. Machine à hacher la paille selon l'une quelconque des revendications 1 à 7, dans laquelle chaque partie de plan incliné (112, 113) est réglable entre plusieurs positions discrètes prédéterminées.

9. Machine à hacher la paille selon l'une quelconque des revendications 1 à 7, dans laquelle chaque partie de plan incliné (112, 113) est réglable infiniment entre des positions d'extrémité.

10. Machine à hacher la paille selon la revendication 8 ou 9, dans laquelle chaque partie de plan incliné (112, 113) est réglable par un moteur (130) pouvant être actionné depuis une cabine/le siège d'un opérateur de la moissonneuse combinée (10).

11. Machine à hacher la paille selon la revendication 8 ou 9, dans laquelle chaque partie de plan incliné (112, 113) est réglable par un moteur (130) pouvant être actionné tandis que la moissonneuse combinée (10) sur laquelle l'appareil est monté, est en train de moissonner.
